# EUROPEAN PATENT APPLICATION

(11) **EP 4 215 849 A1**
(43) Date of publication of application: **26.07.2023**
(21) Application number: 21869189.7
(22) Date of filing: 02.09.2021
(51) Int. Cl.: F25D 11/00, F25B 49/02

(54) **SELECTION DEVICE, SELECTION METHOD, AND PROGRAM**

(30) Priority: 18.09.2020 JP 2020157073
(71) Applicant: Daikin Industries, Ltd., Osaka-shi, Osaka 530-0001 (JP)
(72) Inventor: NAKANO, Masataka, Osaka-shi, Osaka 530-8323 (JP); SATOU, Kiichirou, Osaka-shi, Osaka 530-8323 (JP); NISHIMOTO, Motomi, Osaka-shi, Osaka 530-8323 (JP); MATSUI, Hidenori, Osaka-shi, Osaka 530-8323 (JP)
(74) Representative: Hoffmann Eitle
(86) International application number: PCT/JP2021/032291
(87) International publication number: WO 2022/059502

(57) **Abstract**

A selection apparatus according to an aspect of the disclosure includes a calculation unit configured to calculate, based on data correlated with power consumption of portable cold-energy equipment and data related to a set temperature of the cold-energy equipment, an amount of power consumption expected during transportation of the cold-energy equipment to a predetermined destination; and a selection unit configured to select, based on the amount of power consumption calculated by the calculator, a rechargeable battery to be mounted on the cold-energy equipment.

## Description

### [Technical Field]

This disclosure relates to selection apparatuses, selection methods, and programs.

### [Background Art]

Conventionally, in the shipping or contactless delivery of food, food is kept cold by placing a refrigerant in an insulated box that is transportable by manpower. Cold storage using a refrigerant may, however, require increased man-hours for the preparation of the refrigerant, cause food to spoil due to ineffective cooling, or cause an increase in carbon dioxide emission due to excessive use of refrigerants. Therefore, the use of relatively compact cold-energy equipment such as refrigerators that are driven by rechargeable batteries has gained attention in recent years in the shipping or contactless delivery of food.

### [Related-Art Documents]

### [Patent Documents]

[Patent Document 1] Japanese Patent Application Publication No. 2012-149848
[Patent Document 2] Japanese Patent Application Publication No. 2002-122373

### [Summary of the Invention]

### [Problem to be Solved by the Invention]

However, to enable an insulated box that incorporates cold-energy equipment such as a refrigerator driven by a rechargeable battery to be transported by manpower, it is necessary to select a rechargeable battery that is as light as possible while taking into account the power consumption expected for refrigeration of food or the like.

The disclosure aims to provide a selection apparatus, a selection method, and a program for selecting a rechargeable battery to be mounted in portable cold-energy equipment.

### [Means to Solve the Problem]

A selection apparatus according to the first aspect of the disclosure includes a calculation unit configured to calculate, based on data correlated with power consumption of portable cold-energy equipment and data related to a set temperature of the cold-energy equipment, an amount of power consumption expected during transportation of the cold-energy equipment to a predetermined destination; and a selection unit configured to select, based on the amount of power consumption calculated by the calculator, a rechargeable battery to be mounted on the cold-energy equipment.

According to the first aspect of the disclosure, a selection apparatus for selecting a rechargeable battery to be mounted on portable cold-energy equipment can be provided.

Further, according to the second aspect of the disclosure, in the selection apparatus of the first aspect, the calculation unit uses a trained result acquired based on machine learning of a relationship between the data correlated with power consumption, the data related to the set temperature, and a ground-truth amount of power consumption, to calculate the amount of power consumption.

Further, according to the third aspect of the disclosure, in the selection apparatus of the first or second aspect, the calculation unit calculates, based on time expected for the transportation to the destination, the amount of power consumption.

Further, according to the fourth aspect of the disclosure, the calculation unit uses table data representing a relationship between the data correlated with power consumption, the data related to the set temperature, and a ground-truth amount of power consumption, to calculate the amount of power consumption.

Further, according to the fifth aspect of the disclosure, in the selection apparatus according to any one of the first to fourth aspects, the selection unit selects, from a predetermined plurality of rechargeable batteries, a rechargeable battery that has a power storage capacity exceeding the amount of power consumption.

Further, according to the sixth aspect of the disclosure, in the selection apparatus according to any one of the first to fifth aspects, the data correlated with power consumption includes at least one of internal temperature data of a container including the cold-energy equipment, internal humidity data of the container, internal ventilation amount data of the container, outside air temperature data, or outside air humidity data.

Further, in a selection method executed by a computer according to the seventh aspect of the disclosure, the selection method includes: calculating, based on data correlated with power consumption of portable cold-energy equipment and data related to a set temperature of the cold-energy equipment, an amount of power consumption expected during transportation of the cold-energy equipment to a predetermined destination; and selecting, based on the amount of power consumption calculated in the calculating, a rechargeable battery to be mounted on the cold-energy equipment.

According to the seventh aspect of the disclosure, a selection method for selecting a rechargeable battery that is to be mounted in portable cold-energy equipment can be provided.

Further, in a program according to the eighth aspect of the disclosure, the program causes a computer to execute a process of: calculating, based on data correlated with power consumption of portable cold-energy equipment and data related to a set temperature of the cold-energy equipment, an amount of power consumption expected during transportation of the cold-energy equipment to a predetermined destination; and selecting, based on the amount of power consumption calculated in the calculating, a rechargeable battery to be mounted on the cold-energy equipment.

According to the eighth aspect of the disclosure, a program for selecting a rechargeable battery that is to be mounted in portable cold-energy equipment can be provided.

### [Brief Description of Drawings]

[FIG. 1] FIG. 1 is a view for explaining the outline of cold shipping;
[FIG. 2] FIG. 2 is a block diagram illustrating an example of the system configuration of a refrigeration system during a training phase;
[FIG. 3A] FIG. 3A is a table illustrating an example of a list of data acquired in the refrigeration system;
[FIG. 3B] FIG. 3B is a table illustrating an example of a list of data acquired in the refrigeration system;
[FIG. 4] FIG. 4 is a block diagram illustrating an example of the hardware configuration of a rechargeable-battery selection apparatus;
[FIG. 5] FIG. 5 is a diagram illustrating an example of the functional configuration of the rechargeable-battery selection apparatus during the training phase;
[FIG. 6] FIG. 6 is a diagram illustrating an example of the system configuration of a refrigeration system during an inference phase;
[FIG. 7] FIG. 7 is a diagram illustrating an example of the functional configuration of the rechargeable-battery selection apparatus during the inference phase;
[FIG. 8] FIG. 8 is a view illustrating an example of a rechargeable-battery selection table; and
[FIG. 9] FIG. 9 is a flowchart illustrating the procedure of rechargeable-battery selection processing by the rechargeable-battery selection apparatus.

### [Mode for Carrying Out the Invention]

Embodiments will be described hereinafter with reference to the accompanying drawings. Note that the same reference numerals are used to denote components with substantially the same functional configurations throughout the specification and the drawings, and a repetitive description thereof will be omitted.

### [First Embodiment]

### <Outline of Cold Shipping>

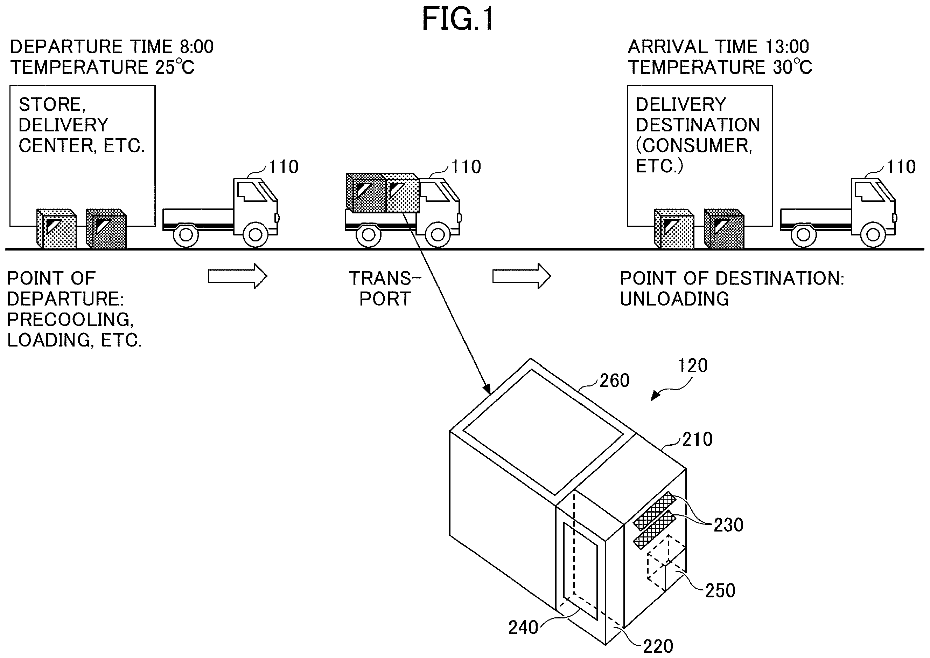

The outline of shipping or contactless delivery (to be referred to as "cold shipping" hereinafter") of food by refrigeration implemented by a refrigeration system according to the first embodiment will be described first. FIG. 1 is a view for explaining the outline of cold shipping. Note that although the term "shipping" will be used in this specification, for example, terms such as "delivery" may also be used.

Cold shipping according to the embodiment is implemented by mounting, onto a vehicle 110, a refrigeration device (for example, a refrigeration device 120) that includes a refrigerator that is driven by a rechargeable battery and an insulated container that is capable of containing food and the like. More specifically, for example, after precooling the refrigeration device and storing the food into the insulated container at a point of departure such as a store or a delivery center, the refrigeration device is loaded onto the vehicle 110 and shipped to a delivery destination such as a consumer or the like. Subsequently, upon arrival at the delivery destination, the refrigeration device is unloaded. At this time, only the food that is stored in the insulated container of the refrigeration device may be provided at the delivery destination or, in the case of contactless delivery, the refrigeration device that contains the food may be left at the delivery destination. Note that in the case of contactless delivery, the refrigeration device is typically collected from the delivery destination at a later time or a later date, and is used again for subsequent cold shipping operations. In the example illustrated in FIG. 1, a mini truck is illustrated as the vehicle 110 used for the transport of the refrigeration device. However, examples of the vehicle 110 are not limited to this and may include, for example, motorcycles, bicycles, carts, and remotely controlled or automatically controlled robots (including flyable robots such as a drones) in addition to various types of automobiles such as vans. Furthermore, the refrigeration device need not only be transported by a vehicle, but may also be transported by manpower.

A refrigerator included in the refrigeration device performs refrigeration for preserving the low-temperature state of food by controlling the internal temperature of the insulated container in accordance with a set temperature that is set in advance by food type (for example, food requiring refrigeration, food requiring freezing, and the like). The power consumption during refrigeration by the refrigerator is affected by various factors such as the outside air temperature and the delivery time in addition to the set temperature (in other words, the power consumption is correlated with various factors such as outside air temperature and delivery time). In the example illustrated in FIG. 1, the delivery time is five hours (the departure time is 8:00 and the arrival time is 13:00), the outside air temperature of the point of departure is 25°C, and the outside air temperature of the point of destination is 30°C. Although not illustrated in FIG. 1, the outside air temperature during transport can also affect the power consumption. Furthermore, outside air humidity and the like can also affect the power consumption.

In general, a rechargeable battery incorporated in a refrigerator that is included in a refrigeration device tends to be larger in size and heavier in weight as the power storage capacity increases, and tends to be smaller in size and lighter in weight as the power storage capacity decreases. Hence, to allow a refrigeration device that is used for cold shipping to be loaded and unloaded easily by manpower, it is preferable to incorporate a rechargeable battery that is as lightweight as possible and is able to satisfy the power consumption expected during refrigeration. Therefore, the refrigeration system according to the first embodiment is configured to allow estimation of the power consumption expected for refrigeration during cold shipping and selection of a rechargeable battery that is as lightweight as possible and is able satisfy the power consumption. The refrigeration system according to the first embodiment will be described hereinafter.

An example of the configuration of the refrigeration device 120 will be described first. As illustrated in FIG. 1, the refrigeration device 120 includes a refrigerator 210, a refrigerator control device 220, and an insulated container 260. The refrigerator 210 is cold-energy equipment that provides cold energy to the insulated container 260 under the control of the refrigerator control device 220. The refrigerator 210 includes, for example, a compressor, a condenser, an expansion mechanism, an evaporator, and the like, and provides cold energy to the insulated container 260 by circulating a refrigerant. The refrigerator control device 220 is a device or apparatus that controls the cold energy, which is provided by the refrigerator 210, in accordance with a preset temperature. The insulated container 260 has heat insulating properties, and is, for example, a box for storing food or the like. Although the refrigerator 210 and the refrigerator control device 220 are depicted separately in the example illustrated in FIG. 1, the refrigerator 210 and the refrigerator control device 220 may also be referred collectively as a "refrigerator".

Although the refrigerator 210 and the refrigerator control device 220 include various types of devices and components, only a ventilation window 230, a refrigerator display device 240, and a rechargeable battery storage unit 250 are depicted among these devices and components in the example illustrated in FIG. 1. The ventilation window 230 is a component for ventilating the inside of the insulated container 260 with outside air. The refrigerator display device 240 displays, for example, the set temperature and the internal temperature of the insulated container 260. The rechargeable battery storage unit 250 is a component that stores rechargeable batteries.

Although not illustrated in FIG. 1, various types of sensors (sensors 270 and the like to be described later) are installed in the refrigeration device 120.

### <System Configuration of Refrigeration System (Training Phase)>

The system configuration of the refrigeration system during the training phase will be described next. Note that in the training phase, the selection of a rechargeable battery is not performed. Instead, training information is collected in the refrigeration system by actually performing cold shipping using a rechargeable battery determined based on human intuition and/or experience, or by simulating an actual cold shipping operation in an experimental environment.

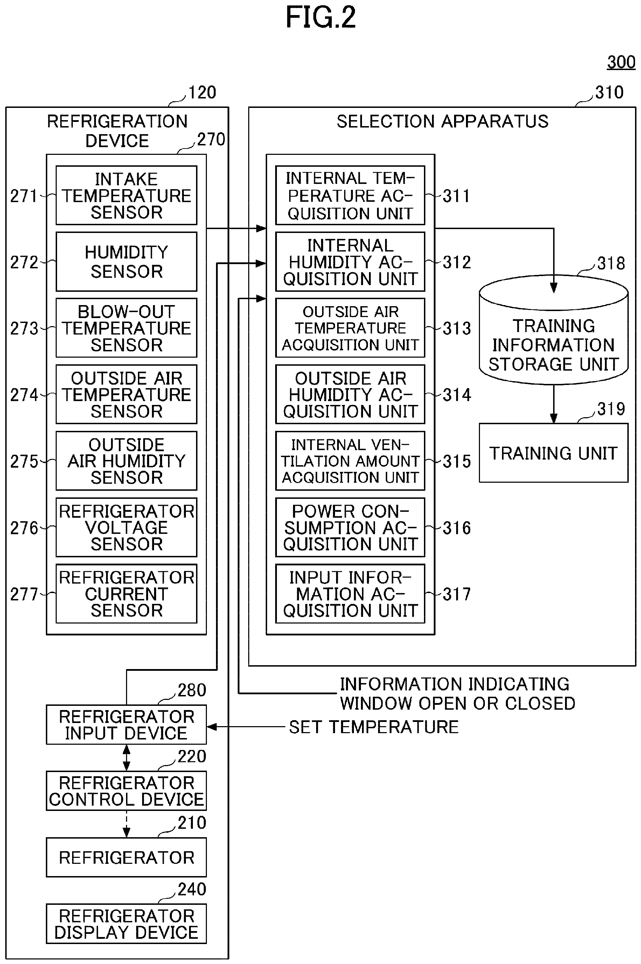

FIG. 2 is a block diagram illustrating an example of the system configuration of the refrigeration system during the training phase. As illustrated in FIG. 2, a refrigeration system 300 includes the refrigeration device 120 and a rechargeable-battery selection apparatus 310.

The refrigeration device 120 includes the refrigerator 210, the refrigerator control device 220, the refrigerator display device 240, the sensors 270, and a refrigerator input device 280. Since the refrigerator 210, the refrigerator control device 220, and the refrigerator display device 240 have already been described with reference to FIG. 1, a description thereof will be omitted.

The refrigerator input device 280 receives, for example, a set temperature for the refrigerator 210 that is input by a manager or a delivery person of the refrigeration device 120. The refrigerator input device 280 transmits the received set temperature to the rechargeable-battery selection apparatus 310 and sets the set temperature in the refrigerator control device 220. Setting the set temperature in the refrigerator control device 220 causes the refrigerator control device 220 to control the cold energy provided by the refrigerator 210 in the insulated container 260 so that the internal temperature of the insulated container 260 becomes closer to the set temperature.

The sensors 270 are various types of sensors installed in the refrigeration device 120. The sensors 270 include an intake temperature sensor 271, a humidity sensor 272, a blow-out temperature sensor 273, an outside air temperature sensor 274, an outside air humidity sensor 275, a refrigerator voltage sensor 276, and a refrigerator current sensor 277.

The intake temperature sensor 271 is a sensor for sensing (measuring) the intake humidity of the insulated container 260. The humidity sensor 272 is a sensor for sensing the internal humidity of the insulated container 260. The blow-out temperature sensor 273 is a sensor for sensing the blow-out temperature of the insulated container 260. The outside air temperature sensor 274 is a sensor for sensing the outside air temperature of the refrigeration device 120. The outside air humidity sensor 275 is a sensor for sensing the outside air humidity of the refrigeration device 120. The refrigerator voltage sensor 276 is a sensor for sensing the voltage while the refrigerator 210 is refrigerating. The refrigerator current sensor 277 is a sensor for sensing the current while the refrigerator 210 is refrigerating.

A rechargeable-battery selection program (training phase) is installed in the rechargeable-battery selection apparatus 310. During the training phase, the rechargeable-battery selection apparatus 310 executes the rechargeable-battery selection program to function as an internal temperature acquisition unit 311, an internal humidity acquisition unit 312, an outside air temperature acquisition unit 313, and an outside air humidity acquisition unit 314. The rechargeable-battery selection apparatus 310 also functions as an internal ventilation amount acquisition unit 315, a power consumption acquisition unit 316, and an input information acquisition unit 317. Further, the rechargeable-battery selection apparatus 310 functions as a training unit 319. Note that since the rechargeable-battery selection program is a program for training a model for power consumption estimation (a power consumption model to be described later), it may also be referred to as, for example, a "training program".

The internal temperature acquisition unit 311 acquires the internal temperature data representing the temperature inside the insulated container 260. More specifically, either the intake temperature data output from the intake temperature sensor 271 or the blow-out temperature data output from the blow-out temperature sensor 273 is acquired as the internal temperature data by the internal temperature acquisition unit 311.

The internal temperature acquisition unit 311 associates the acquired internal temperature data with time data for each unit time, and stores the associated data as training information in a training information storage unit 318.

The internal humidity acquisition unit 312 acquires the internal humidity data representing the humidity inside the insulated container 260. More specifically, the humidity data output from the humidity sensor 272 is acquired as the internal humidity data by the internal humidity acquisition unit 312.

The internal humidity acquisition unit 312 also associates the acquired internal humidity data with time data for each unit time, and stores the associated data as training information in the training information storage unit 318.

The outside air temperature acquisition unit 313 acquires the outside air temperature data representing the temperature of air outside of the refrigeration device 120. More specifically, the outside air temperature acquisition unit 313 acquires the outside air temperature data output from the outside air temperature sensor 274. Alternatively, the outside air temperature acquisition unit 313 may acquire the outside air temperature data from weather data of the peripheral or surrounding environment of the refrigeration device 120.

Further, the outside air temperature acquisition unit 313 associates the acquired outside air temperature data with time data for each unit time, and stores the associated data as training information in the training information storage unit 318.

The outside air humidity acquisition unit 314 acquires outside air humidity data representing the humidity of air outside of the refrigeration device 120. More specifically, the outside air humidity acquisition unit 314 acquires the outside air humidity data output from the outside air humidity sensor 275. Alternatively, the outside air humidity acquisition unit 314 may acquire the outside air humidity data from the weather data of a peripheral or surrounding environment of the refrigeration device 120.

Further, the outside air humidity acquisition unit 314 associates the acquired outside air humidity data with time data for each unit time, and stores the associated data as training information in the training information storage unit 318.

The internal ventilation amount acquisition unit 315 acquires the internal ventilation amount data representing the ventilation amount inside the insulated container 260. More specifically, the internal ventilation amount acquisition unit 315 derives the ventilation amount by receiving input of information indicating whether the ventilation window 230 of the refrigerator 210 is open or closed. For example, when the ventilation window 230 is in a closed state, the internal ventilation amount acquisition unit 315 acquires internal ventilation amount data representing that ventilation amount is equal to "zero". In contrast, when the ventilation window 230 is in an open state, the internal ventilation amount acquisition unit 315 acquires the internal ventilation amount data representing that the ventilation amount is equal to "a predetermined value". Note that the internal ventilation amount acquisition unit 315 may be configured to acquire the internal ventilation amount data representing a ventilation amount that corresponds to the degree of opening and closure of the ventilation window 230.

Further, the internal ventilation amount acquisition unit 315 associates the acquired internal ventilation amount data with time data for each unit time, and stores the associated data as training information in the training information storage unit 318.

The power consumption acquisition unit 316 acquires the power consumption data representing the power consumption while the refrigerator 210 executes refrigeration. More specifically, the power consumption acquisition unit 316 acquires the power consumption data representing the power consumption by deriving the power to be consumed from the voltage data output from the refrigerator voltage sensor 216 and the current data output from the refrigerator current sensor 217. Note that the power to be consumed is derived as a product of the voltage, which is represented by the voltage data, and the current, which is represented by the current data.

The input information acquisition unit 317 acquires the set temperature received by the refrigerator input device 280. Note that the set temperature is set in advance in accordance with the type of food to be stored in the insulated container 260. Note that, however, the set temperature may also be suitably changed during cold shipping. If the set temperature is changed, the input information acquisition unit 317 acquires the latest set temperature received by the refrigerator input device 280.

Further, the input information acquisition unit 317 associates the acquired temperature information with time data for each unit time, and stores the associated data as training information in the training information storage unit 318.

The training unit 319 uses the training information stored in the training information storage unit 318 to perform machine learning with respect to a model (to be referred to as a power consumption model) hereinafter) for estimating the power consumption per unit time. As a result, the training unit 319 generates a trained power-consumption model for estimating the power consumption per unit time in the inference phase. The generation of a trained power consumption model based on machine learning will be described in detail later.

Note that the internal temperature of the insulated container 260, the internal humidity of the insulated container 260, the outside air temperature, the outside air humidity, and the internal ventilation amount of the insulated container 260 are all or partially correlated with the power consumption of the refrigerator 210. Hence, all or some of the internal temperature data, the internal humidity data, the outside air temperature data, the outside air humidity data, and the internal ventilation amount data will also be referred to as data correlated with power consumption. Furthermore, among these, the outside air temperature data and the outside air humidity data will also be referred to as data related to the surrounding environment of the refrigeration device 120.

### <List of Data Acquired in Refrigeration System>

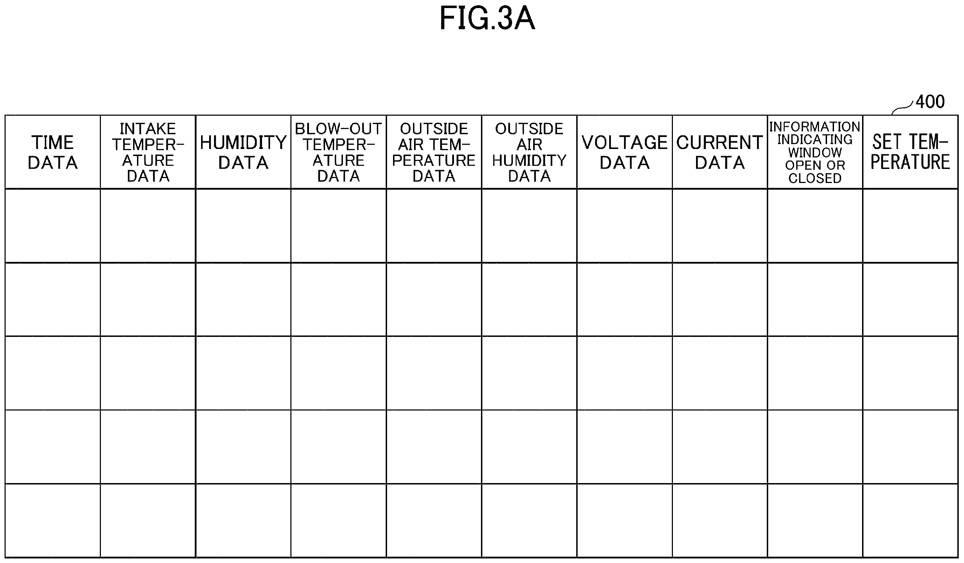

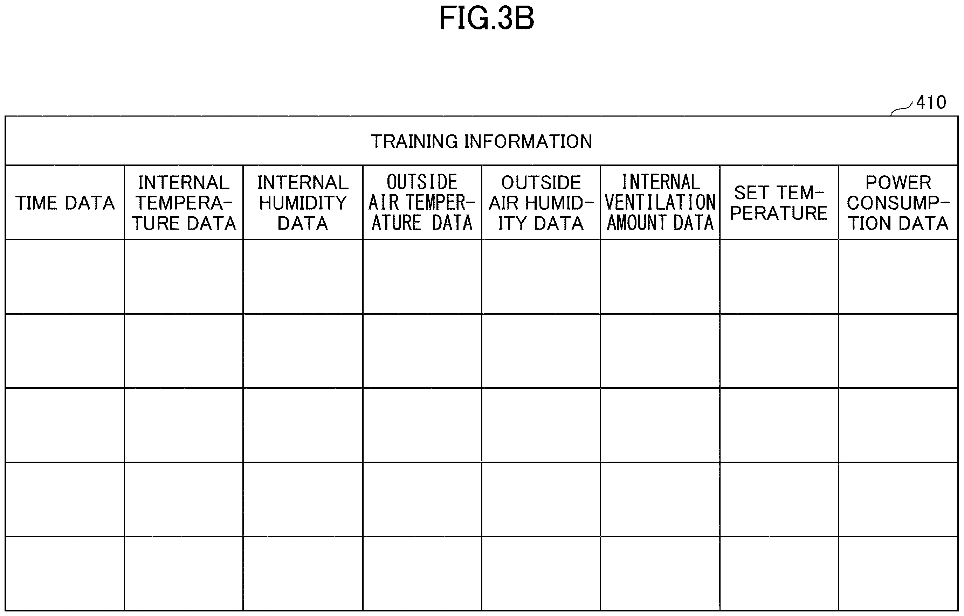

The list of data acquired in the refrigeration system 300 during the training phase will be described next. FIGS. 3A and 3B are tables each illustrating a list of data acquired in the refrigeration system. FIG. 3A illustrates a list 400 of data received by the rechargeable-battery selection apparatus 310, and FIG. 3B illustrates training information 410.

As illustrated in the list 400 of data in FIG. 3A, the rechargeable-battery selection apparatus 310 receives the data output from the intake temperature sensor 271, the humidity sensor 272, and the blow-out temperature sensor 273 in association with the time data.

The rechargeable-battery selection apparatus 310 also receives data output from the outside air temperature sensor 274, the outside air humidity sensor 275, the refrigerator voltage sensor 276, and the refrigerator current sensor 277 in association with the time data.

The rechargeable-battery selection apparatus 310 also receives the received information, which indicates whether the ventilation window is open or closed, and the set temperature, which is output from the refrigerator input device 280, in association with the time data.

As described above, some of the received data or the data derived based on the received data are stored as training information for each unit time in the training information storage unit 318 by each unit of the rechargeable-battery selection apparatus 310.

The example of FIG. 3B illustrates a state in which the internal temperature data, the internal humidity data, the outside air temperature data, the outside air humidity data, the internal ventilation amount data, the set temperature, and the power consumption data are stored as the training information 410 in association with the time data for each unit time in the training information storage unit 318. Among these, the power consumption data are used as the ground truth data (alternatively, to be also referred to as "training data") during machine learning. Note that "unit time" refers to a predetermined length of time.

### <Hardware Configuration of Rechargeable-Battery Selection Apparatus>

The hardware configuration of the rechargeable-battery selection apparatus 310 will be described next. Note that a rechargeable-battery selection apparatus 710 that is to be described later can also be implemented using the same hardware configuration as the rechargeable-battery selection apparatus 310.

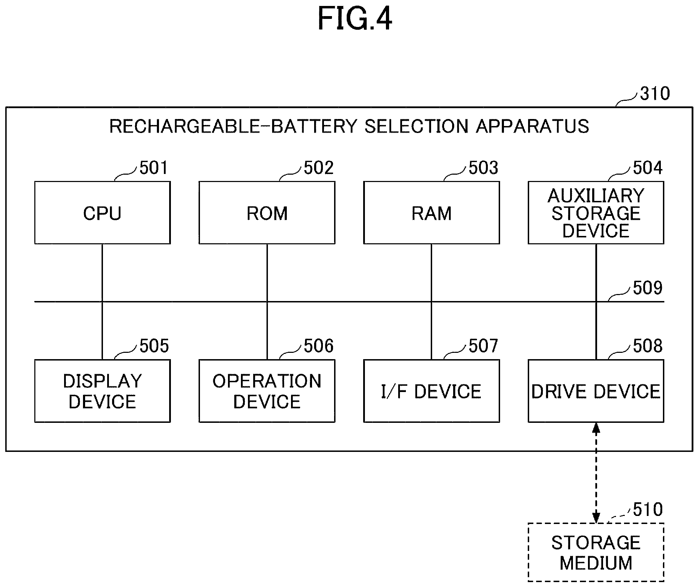

FIG. 4 is a block diagram illustrating an example of the hardware configuration of the rechargeable-battery selection apparatus. As illustrated in FIG. 4, the rechargeable-battery selection apparatus 310 includes a central processing unit (CPU) 501, a read only memory (ROM) 502, and a random access memory (RAM) 503. The CPU 501, the ROM 502, and the RAM 503 form what is commonly called a computer. The rechargeable-battery selection apparatus 310 includes an auxiliary storage device 504, a display device 505, an operation device 506, an interface (I/F) device 507, and a drive device 508. The hardware components of the rechargeable-battery selection apparatus 310 are connected to each other via a bus 509.

The CPU 501 is a computational device that executes various programs (for example, a rechargeable-battery selection program and the like) installed in the auxiliary storage device 504. The ROM 502 is a non-volatile memory. The ROM 502 stores the data and various programs required for the CPU 501 to execute the various programs installed in the auxiliary storage device 504. More specifically, the ROM 502 stores boot programs such as basic input/output system (BIOS) and extensible firmware interface (EFI).

The RAM 503 is a volatile memory such as dynamic random access memory (DRAM) or static random access memory (SRAM). The RAM 503 functions as a primary storage device that provides a work area loaded when the various programs that are installed in the auxiliary storage device 504 are executed by the CPU 501.

The auxiliary storage device 504 stores various programs and information used when the various programs are executed.

The display device 505 is a display device that displays the internal state of the rechargeable-battery selection apparatus 310. The operation device 506 is, for example, an operation device used by a manager of the rechargeable-battery selection apparatus 310 to perform various types of operations on the rechargeable-battery selection apparatus 310. The I/F device 507 is a connection device to connect with the sensors 270, the refrigerator input device 280, and the like of the refrigeration device 120 and receive data from them.

The drive device 508 is a device for setting the storage medium 510. The storage medium 510 referred to here includes a medium such as a CD-ROM, a flexible disk, a magneto-optical disk, or the like that optically, electrically, or magnetically records information. Furthermore, the storage medium 510 may include a semiconductor memory such as a ROM, a flash memory, or the like that electrically records information.

Note that the various programs installed in the auxiliary storage device 504 are installed by, for example, setting the distributed storage medium 510 in the drive device 508 and causing the drive device 508 to read the various programs recorded in the storage medium 510. Alternatively, the various programs installed in the auxiliary storage device 504 may be installed by being downloaded from a network (illustration omitted).

### <Functional Configuration of Rechargeable-Battery Selection Apparatus (Training Phase)>

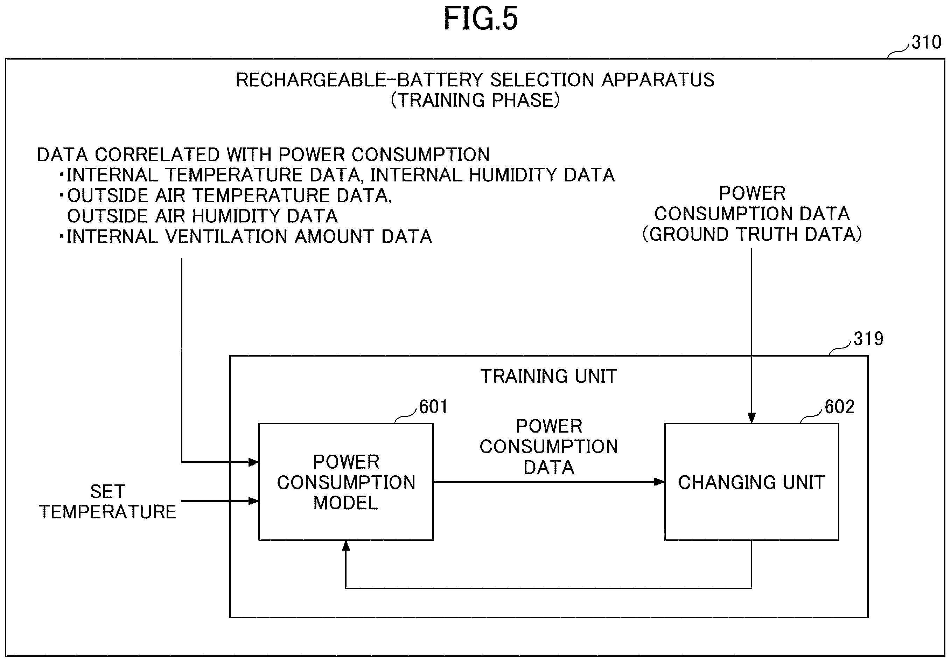

The functional configuration of the rechargeable-battery selection apparatus 310 during the training phase will be described next. FIG. 5 is a view illustrating an example of the functional configuration of the rechargeable-battery selection apparatus during the training phase. As illustrated in FIG. 5, the training unit 319 includes a power consumption model 601 and a changing unit 602. The training unit 319 reads the training information from the training information storage unit 318. The data including the combination of the set temperature and the data correlated with the power consumption are input to the power consumption model 601 from the read training information by the training unit 319. More specifically, the training unit 319 inputs the internal temperature data, the internal humidity data, the outside air temperature data, the outside air humidity data, the internal ventilation amount data, and the set temperature into the power consumption model 601.

As a result, the training unit 319 runs the power consumption model 601, the power consumption model 601 outputs the power consumption data.

The power consumption data output from the power consumption model 601 are input to the changing unit 602. The changing unit 602 compares the power consumption data that have been output from the power consumption model 601 with the power consumption data (ground-truth data) included in the training information read from the training information storage unit 318. The changing unit 602 changes (updates) the model parameters of the power consumption model 601 in accordance with the comparison result. Changing of the model parameters is repeatedly performed in this manner until a predetermined condition is satisfied. The predetermined condition may be, for example, the repetition count reaching or exceeding a predetermined threshold, the updating amount of the model parameters become less than a predetermined threshold (that is, the model parameters have converged), or the like.

Note that the power consumption data (ground-truth data) to be compared by the changing unit 602 are the power consumption data associated with the same time data as the data input to the power consumption model 601.

In this manner, the training unit 319 performs machine learning with respect to the power consumption model 601 that specifies the correspondence between the power consumption data (ground-truth data) and the data including the combination of the set temperature and the data correlated with the power consumption of the refrigerator 210. This allows the training unit 319 to generate a trained power consumption model.

Note that the example of FIG. 5 illustrated a case where the internal temperature data, the internal humidity data, the outside air temperature data, the outside air humidity data, and the internal ventilation amount data as the data correlated with the power consumption of the refrigerator 210 are input into the power consumption model 601 by the training unit 319. However, the training unit 319 may also input only some of these data into the power consumption model 601.

### <System Configuration of Refrigeration System (Inference Phase)>

The system configuration of the refrigeration system during the inference phase will be described. Note that in the inference phase, the power consumption is inferred in the rechargeable-battery selection apparatus, and the type and the number of rechargeable batteries to be stored in the rechargeable battery storage unit 250 of the refrigerator 210 are selected based on the estimated power consumption.

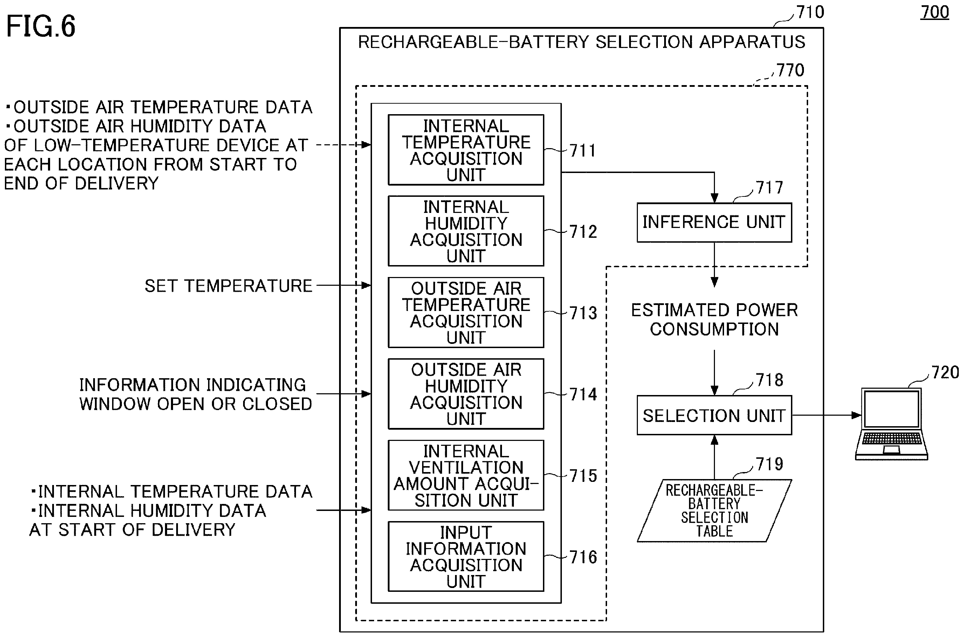

FIG. 6 is a diagram illustrating an example of the system configuration of the refrigeration system during the inference phase. Differences from the refrigeration system 300 (FIG. 2) of the training phase are in that, in the case of a refrigeration system 800 of the inference phase, the rechargeable-battery selection apparatus 710 includes an internal temperature acquisition unit 711, an internal humidity acquisition unit 712, an outside air temperature acquisition unit 713, an outside air humidity acquisition unit 714, an internal ventilation amount acquisition unit 715, and an input information acquisition unit 716. Further, the refrigeration system 800 of the inference phase is also different in that the rechargeable-battery selection apparatus 710 includes an inference unit 717 and a selection unit 718. Furthermore, the refrigeration system 800 of the inference phase is also different in that a management terminal 720 is included. Although the illustration of the refrigeration device 120, which was illustrated in the example of FIG. 6, has been omitted here, the refrigeration device 120 includes the same configuration as that in FIG. 2.

The rechargeable-battery selection apparatus 710 estimates, based on the data correlated with the power consumption during cold shipping, the total power consumption from the start to the end of cold shipping. The rechargeable-battery selection apparatus 710 also selects, based on the estimated total power consumption (to be referred to as an "estimated amount of power consumption" hereinafter), the type and number of rechargeable batteries to be stored in the rechargeable battery storage unit 250 of the refrigerator 210. That is, the rechargeable-battery selection apparatus 710 estimates the total power consumption predicted for the cold shipping before the actual cold shipping is performed, and then selects the rechargeable battery so as to satisfy the total power consumption and to be the lightest.

A rechargeable-battery selection program (inference phase) is installed in the rechargeable-battery selection apparatus 710. During the inference phase, the rechargeable-battery selection apparatus 710 executes the rechargeable-battery selection program to function as the internal temperature acquisition unit 711, the internal humidity acquisition unit 712, the outside air temperature acquisition unit 713, and the outside air humidity acquisition unit 714. The rechargeable-battery selection apparatus 710 also functions as the internal ventilation amount acquisition unit 715, the input information acquisition unit 716, the inference unit 717, and the selection unit 718. Note that the program that causes units to function as units denoted by reference numeral 770 may be referred to as a "power consumption estimation program". That is, the rechargeable-battery selection program (inference phase) may include the power consumption estimation program and a program for functioning as the selection unit 718.

The internal temperature acquisition unit 711 acquires the internal temperature data representing the internal temperature of the insulated container 260 at the start of cold shipping. More specifically, the internal temperature acquisition unit 711 acquires the internal temperature input to the rechargeable-battery selection apparatus 710 as the internal temperature data. Note that this internal temperature may be input to the rechargeable-battery selection apparatus 710 from the management terminal 720.

Alternatively, for example, the internal temperature data output from the intake temperature sensor 271 or the blow-out temperature data output from the blow-out temperature sensor 273 may be acquired as the internal temperature data by the internal temperature acquisition unit 711 after the precooling of the insulated container 260 has been completed.

The internal humidity acquisition unit 712 acquires the internal humidity data representing the internal humidity of the insulated container 260 at the start of cold shipping. More specifically, the internal humidity input to the rechargeable-battery selection apparatus 710 is acquired as the internal humidity data by the internal humidity acquisition unit 712. Note that the internal humidity may be input to the rechargeable-battery selection apparatus 710 from the management terminal 720.

Alternatively, for example, the humidity data output from the humidity sensor 272 may be acquired as the internal humidity data by the internal humidity acquisition unit 712 after the precooling of the insulated container 260 has been completed.

The outside air temperature acquisition unit 713 acquires the outside air temperature data representing the outside air temperature at each location of the refrigeration device 120 for each unit time from the start to the end of cold shipping. More specifically, the outside air temperature at each location on the route from the point of departure to the point of destination of cold shipping is acquired as the outside temperature data for each unit time by the outside air temperature acquisition unit 713.

The outside air humidity acquisition unit 714 acquires the outside air humidity data representing the outside air humidity at each location of the refrigeration device 120 for each unit time from the start to the end of cold shipping. More specifically, the outside air humidity at each location on the route from the point of departure to the point of destination of cold shipping is acquired as the outside humidity data for each unit time by outside air humidity acquisition unit 714.

Note that the route from the point of departure to the point of destination can be acquired by using, for example, a route search service, and the outside air temperature and the outside air humidity at each location on the route for each unit time can be acquired from the weather forecast data provided from a known weather forecasting service or the like. Furthermore, with the route search service, the estimated travel time from the point of departure to the point of destination can also be obtained during the route search.

The internal ventilation amount acquisition unit 715 acquires the internal ventilation amount data representing the internal ventilation amount of the insulated container 260 during cold shipping. More specifically, in a similar manner to the training phase, the internal ventilation amount data representing the ventilation amount is acquired by the internal ventilation amount acquisition unit 715 by deriving the ventilation amount by receiving input of information indicating whether the ventilation window 230 of the refrigerator 210 is open or closed.

The input information acquisition unit 716 acquires, as the set temperature for the cold shipping, the set temperature received by the refrigerator input device 280 before the start of the cold shipping.

The inference unit 717 includes the trained power-consumption model. The inference unit 717 acquires the set temperature and the data correlated with the power consumption of the refrigerator 210 from respective units including the internal temperature acquisition unit 711 to the input information acquisition unit 716.

Further, the inference unit 717 executes the trained power consumption model by inputting, for each unit time, combined data composed of the set temperature and the data correlated with the power consumption that have been acquired. As a result, the inference unit 717 is able to estimate the power consumption data for each unit time from the start to the end of cold shipping.

Further, the sum of the power consumption data for each unit time is calculated as the estimated amount of power consumption by the inference unit 717. The estimation of the power consumption and the calculation of the estimated amount of power consumption by the trained power consumption model will be described in detail later.

Based on the estimated amount of power consumption calculated by the inference unit 717, the selection unit 718 selects, from a rechargeable-battery selection table 719, the type and the number of rechargeable batteries to be stored in the rechargeable battery storage unit 250 of the refrigerator 210. The rechargeable-battery selection table 719 is a table in which the type and number of rechargeable batteries have been associated for each range of power storage capacity. Note that in a case where there is only one type of rechargeable battery, the rechargeable-battery selection table may be a table in which only the number of rechargeable batteries has been associated with each range of power storage capacity. An example of the rechargeable-battery selection table 719 will be described later.

Further, the selection unit 718 reports the selected type and number of rechargeable batteries to the management terminal 720. As a result, a user (for example, a manager of the refrigeration device 120) of the management terminal 720 is able to store the reported type and number of rechargeable batteries in the rechargeable battery storage unit 250 of the refrigerator 210 included in the refrigeration device 120.

### <Functional Configuration of Rechargeable-Battery Selection Apparatus (Inference Phase)>

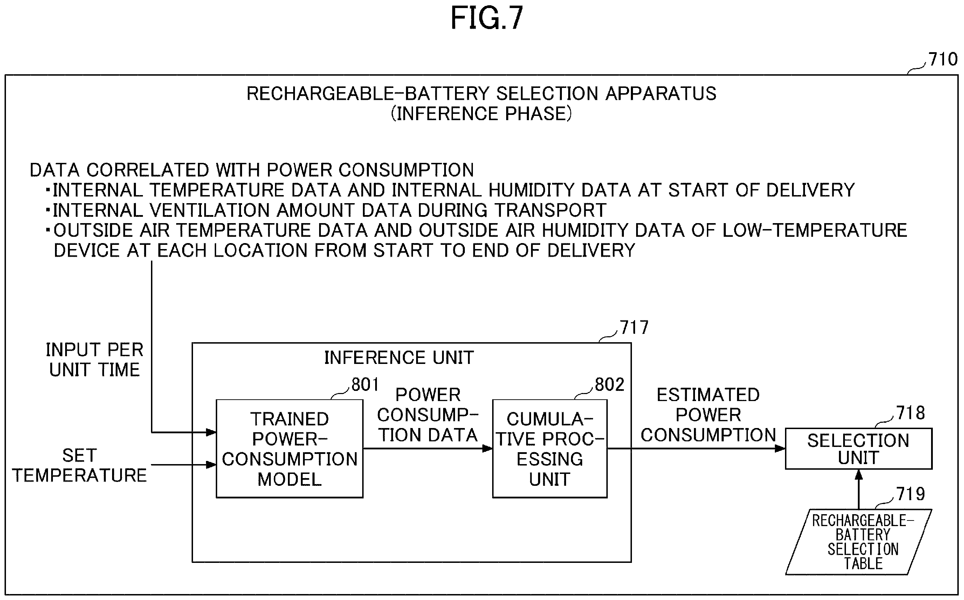

The functional configuration of the rechargeable-battery selection apparatus 710 during the inference phase will be described next. FIG. 7 is a diagram illustrating an example of the functional configuration of the rechargeable-battery selection apparatus during the inference phase. As illustrated in FIG. 7, the inference unit 717 includes a trained power-consumption model 801 and a cumulative processing unit 802. The inference unit 717 acquires, from respective units including the internal temperature acquisition unit 711 to the input information acquisition unit 716, the set temperature and the data correlated with the power consumption during the estimated time from the start to the end of the cold shipping (for example, the estimated travel time from the point of departure to the point of destination of the cold shipping).

The inference unit 717 executes the trained power-consumption model 801 by inputting the combined data composed of the set temperature and the data correlated with the power consumption that have been acquired into the trained power-consumption model 801 for each unit time. As a result, the trained power-consumption model 801 estimates the power consumption data for each unit time within the estimated time expected from the start to the end of the cold shipping.

Note that the internal temperature data, the internal humidity data, the internal ventilation amount data, and the set temperature are fixed for each unit time because data at the start of cold shipping are used. In contrast, since the data acquired at each location of the refrigeration device 120 for each unit time from the start to the end of cold shipping are used for the outside air temperature data and the outside air humidity data, the data may can change for each unit time for the outside air temperature data and the outside air humidity data. However, for example, if the internal ventilation amount data or the set temperature changes during the cold shipping operation, the internal ventilation amount data or the set temperature can also change for each unit time.

The power consumption data output for each unit time from the trained power-consumption model 801 are input to the cumulative processing unit 802. The cumulative processing unit 802 calculates the estimated amount of power consumption by calculating the sum of the power consumption represented by the power consumption data output for each unit time within the estimated time expected from the start to the end of the cold shipping. The estimated amount of power consumption calculated and output from the cumulative processing unit 802 is input to the selection unit 718.

Based on the estimated amount of power consumption output from the cumulative processing unit 802, the selection unit 718 selects, from the rechargeable-battery selection table 719, the type and number of rechargeable batteries to be stored in the rechargeable battery storage unit 250 of the refrigerator 210.

For example, there may be three types of rechargeable batteries: "SMALL", "MEDIUM", and "LARGE". Let y be the power storage capacity of the "SMALL" type rechargeable battery, 2 × y be the power storage capacity of the "MEDIUM" type rechargeable battery, and 4 × y be the power storage capacity of the "LARGE" type rechargeable battery. In this case, for example, letting x be the estimated amount of power consumption and z be the power storage capacity expected from the start to the end of the cold shipping, the selection unit 718 calculates the expected power storage capacity [kW-h] by z = α × x. Here, α is a safety factor that takes into account cases where a traffic congestion occurs during cold shipping or the weather forecast is wrong, and, for example, a value that satisfies 1.0 < α ≤ 2.0 may be preset as such a safety factor.

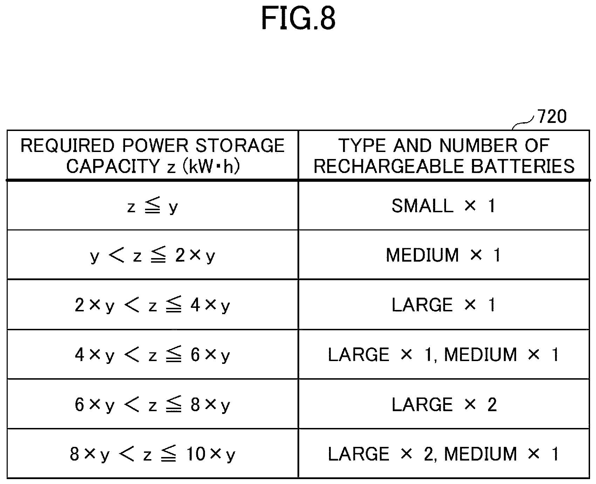

Subsequently, the selection unit 718 selects from, for example, the rechargeable-battery selection table 719 illustrated in FIG.8, the type and the number of rechargeable batteries corresponding to the expected power storage capacity z. In the example illustrated in FIG. 8, one "SMALL" type rechargeable battery is selected in the case where z ≤ y, one "MEDIUM" type rechargeable battery is selected in the case where y < z ≤ 2 × y, and one "LARGE" type rechargeable battery is selected in the case where 2 × y < z ≤ 4 × y. Furthermore, one "LARGE" type rechargeable battery and one "MEDIUM" type rechargeable battery are selected in a case where 4 × y < z ≤ 6 × y, two "LARGE" type rechargeable batteries are selected in a case where 6 × y < z ≤ 8 × y, and two "LARGE" type rechargeable batteries and one "MEDIUM" type rechargeable battery are selected in a case where 8 × y < z ≤ 10 × y.

Note that the rechargeable-battery selection table 719 illustrated in FIG. 8 is merely an example. Any given table in which each expected power storage capacity (or its range thereof) is associated with the type and the number of rechargeable batteries can be used as the rechargeable-battery selection table. Furthermore, the number of types of rechargeable batteries is also not limited to three.

In this manner, the inference unit 717 estimates the power consumption data for each unit time by inputting the combined data, which are composed of the set temperature and the data correlated with the power consumption, into the trained power-consumption model 801 for each unit of time within the estimated travel time from the point of departure to the point of destination when cold shipping is to be performed. The inference unit 717 also calculates, as the estimated amount of power consumption for the estimated travel time, the sum of the power consumption represented by the power consumption data for each unit time within the estimated travel time. As a result, the selection unit 718 is able to select the lightest rechargeable battery having the power storage capacity that satisfies the estimated amount of power consumption.

Note that the example of FIG. 7 illustrated a case where the internal temperature data, the internal humidity data, the outside air temperature data, the outside air humidity data, and the internal ventilation amount data are input as the data correlated with the power consumption of the refrigerator 210 to the trained power-consumption model 801 by the inference unit 717. However, in a similar manner to the training unit 319 during the training phase, the inference unit 717 may also input only some of these data into the trained power-consumption model 801.

### <Procedure of Rechargeable-Battery Selection Processing>

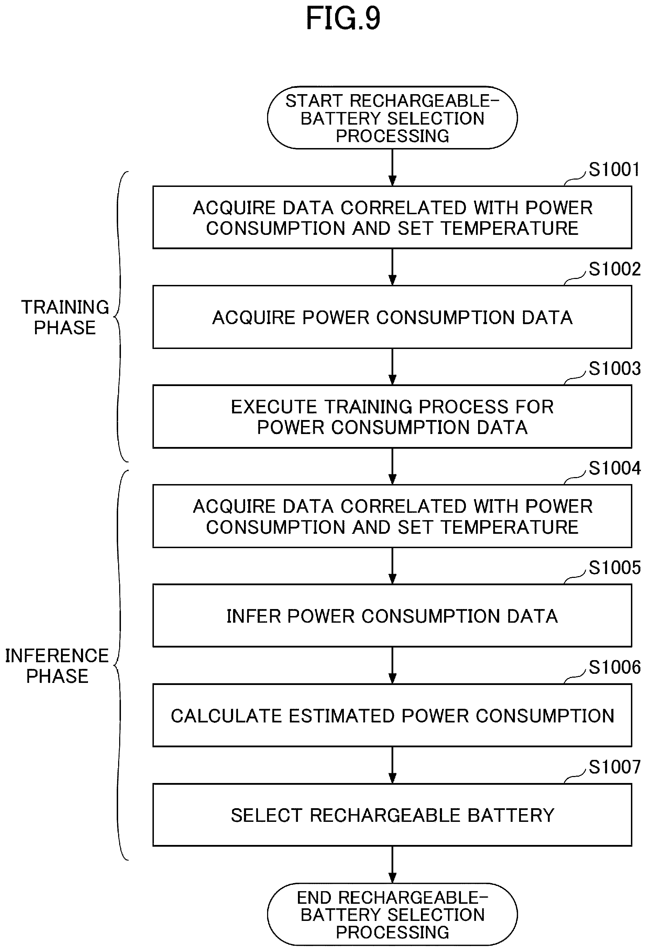

The procedure of the rechargeable-battery selection processing by the rechargeable-battery selection apparatus 310 during the training phase and by the rechargeable-battery selection apparatus 710 during the inference phase will be described next. FIG. 9 is a flowchart illustrating the rechargeable-battery selection processing by the rechargeable-battery selection apparatus.

In step S1001, the internal temperature acquisition unit 311 to the internal ventilation amount acquisition unit 315 acquire the data correlated with the power consumption of the refrigerator 210. The input information acquisition unit 317 acquires the set temperature.

In step S1002, the power consumption acquisition unit 316 acquires the power consumption data.

In step S1003, the combined data composed of the set temperature and the data correlated with the power consumption are input to the power consumption model 601 by the training unit 319 to execute the power consumption model 601. Subsequently, the training unit 319 performs machine learning with respect to the power consumption model 601 so that the power consumption data output from the power consumption model 601 becomes closer to the power consumption data power consumption data acquired by the power consumption acquisition unit 316. As a result, the training unit 319 generates the trained power-consumption model 801. Note that the generated trained power-consumption model 801 is incorporated into the rechargeable-battery selection apparatus 710 of the inference phase.

Note that when the training unit 319 performs machine learning with respect to the power consumption model 601, the model parameters may be updated at once by using all of the pieces of training information or the model parameters may be updated for each predetermined number of pieces of training information. Alternatively, the model parameters may be updated for each piece of training information.

In step S1004, the internal temperature acquisition unit 711 to the internal ventilation amount acquisition unit 715 acquire the data correlated with the power consumption of the refrigerator 210. The input information acquisition unit 716 acquires the set temperature.

In step S1005, the combined data composed of the set temperature and the data correlated with the power consumption are input to the trained power-consumption model 801 for each unit time by the inference unit 717 to execute the trained power-consumption model 801. As a result, the inference unit 717 estimates the power consumption data for each unit time.

In step S1006, the inference unit 717 calculates the estimated amount of power consumption by calculating the sum of the power consumption data for each unit time.

In step S1007, based on the estimated amount of power consumption, the type and the number of rechargeable batteries to be stored in the rechargeable battery storage unit 250 of the refrigerator 210 are selected by the selection unit 718 from the rechargeable-battery selection table 719.

### <Summary>

As is obvious from the above description, in the rechargeable-battery selection apparatus according to the first embodiment:
- Training with respect to the power consumption data is performed for each unit time in accordance with a dataset of combined data composed of the data correlated with the power consumption and the set temperature for each unit time.
- The power consumption data for each unit time are estimated, with respect to the training result, based on the data composed of the set temperature and the data correlated with the power consumption for each unit of time expected or predicted at the time of actual cold shipping. Furthermore, since the outside air temperature and the outside air humidity that are acquired from weather forecast data at each location on the shipping route are used at this time, more accurate power consumption data that take into account the impact of short-term changes in the weather can be estimated.

- The estimated amount of power consumption, which represents the total power consumption during the cold shipping is calculated by calculating the sum of the power consumption data estimated at the estimated or predicted times during the cold shipping.
- The type and the number of the lightest rechargeable batteries having the power storage capacity that satisfies the estimated amount of power consumption that was calculated are selected.

Therefore, the rechargeable-battery selection apparatus according to the first embodiment can select a rechargeable battery that can satisfy the power storage capacity expected for the cold shipping and that can reduce the weight of the refrigeration device 120. As a result, for example, it is possible to reduce the labor of the delivery person when the refrigeration device 120 is to be carried during the shipping or contactless delivery of a product.

In this manner, according to the first embodiment, a selection apparatus, a selection method, and a program for selecting a rechargeable battery to be mounted in portable cold-energy equipment.

### [Second Embodiment]

The above first embodiment described a case in which the training of a power consumption model was performed. However, for example, the total power consumption during cold shipping may also be estimated by using a table in which the relationship between the data correlated with the power consumption, the set temperature, and the power consumption has been defined based on rules. Although such a table may be created by any known method, the table may be, for example, created manually by using the training information 410.

Furthermore, although the installation location of the rechargeable-battery selection apparatus was not particularly described in the first embodiment, the rechargeable-battery selection apparatus may be installed in any given location. The rechargeable-battery selection apparatus 310 of the training phase can be installed in any given location as long as data communication with the refrigeration device 120 is possible via a network. In a similar manner, the rechargeable-battery selection apparatus 710 of the inference phase can also be installed in any given location.

Further, the rechargeable-battery selection apparatus 310 of the training phase and the rechargeable-battery selection apparatus 710 of the inference phase may be formed integrally or separately.

Although the first embodiment did not particularly describe the details of the model (power consumption model) used in the machine learning, any type of model can be applied as the model to be used in the machine learning. More specifically, any type of model such as a neural network (NN) model, a random forest model, a support vector machine (SVM) model, or the like may be used.

Furthermore, although the first embodiment did not particularly describe the details of the changing method used when the model parameters are changed based on the comparison result by the changing unit 602, the method by which the model parameters are changed by the changing unit 602 can depend on the type of the model.

Although embodiments have been described above, it should be understood that various changes in form and detail may be made without departing from the spirit and scope of the claims. This international application is based on and claims priority to Japanese Patent Application No. 2020-157073, filed on September 18, 2020, the entire contents of which are incorporated herein by reference.

### [Reference Signs List]

- 110:: vehicle
- 120:: refrigeration device
- 210:: refrigerator
- 220:: refrigerator control device
- 230:: ventilation windows
- 240:: refrigerator display device
- 250:: rechargeable battery storage unit
- 260:: insulated container
- 270:: sensors
- 271:: intake temperature sensor
- 272:: humidity sensor
- 273:: blow-out temperature sensor
- 274:: outside air temperature sensor
- 275:: outside air humidity sensor
- 276:: refrigerator voltage sensor
- 277:: refrigerator current sensor
- 280:: refrigerator input device
- 300:: refrigeration system
- 310:: selection apparatus
- 311:: internal temperature acquisition unit
- 312:: internal humidity acquisition unit
- 313:: outside air temperature acquisition unit
- 314:: outside air humidity acquisition unit
- 315:: internal ventilation amount acquisition unit
- 316:: power consumption acquisition unit
- 317:: input information acquisition unit
- 318:: training information storage unit
- 319:: training unit
- 601:: power consumption model
- 602:: changing unit
- 700:: refrigeration system
- 710:: rechargeable-battery selection apparatus
- 711:: internal temperature acquisition unit
- 712:: internal humidity acquisition unit
- 713:: outside air temperature acquisition unit
- 714:: outside air humidity acquisition unit
- 715:: internal ventilation amount acquisition unit
- 716:: input information acquisition unit
- 717:: inference unit
- 718:: selection unit
- 719:: rechargeable-battery selection table
- 801:: trained power-consumption model
- 802:: cumulative processing unit

## Claims

1. A selection apparatus comprising:
a calculation unit configured to calculate, based on data correlated with power consumption of portable cold-energy equipment and data related to a set temperature of the cold-energy equipment, an amount of power consumption expected during transportation of the cold-energy equipment to a predetermined destination; and
a selection unit configured to select, based on the amount of power consumption calculated by the calculation unit, a rechargeable battery to be mounted on the cold-energy equipment.

2. The selection apparatus according to claim 1, wherein the calculation unit is configured to use a trained result acquired based on machine learning of a relationship between the data correlated with power consumption, the data related to the set temperature, and a ground-truth amount of power consumption to calculate the amount of power consumption.

3. The selection apparatus according to claim 1 or 2, wherein the calculation unit is configured to calculate, also based on time expected for the transportation to the destination, the amount of power consumption.

4. The selection apparatus according to claim 1, wherein the calculation unit is configured to use table data representing a relationship between the data correlated with power consumption, the data related to the set temperature, and a ground-truth amount of power consumption to calculate the amount of power consumption.

5. The selection apparatus according to any one of claims 1 to 4, wherein the selection unit is configured to select, from a predetermined plurality of rechargeable batteries, a rechargeable battery that has a power storage capacity exceeding the amount of power consumption.

6. The selection apparatus according to any one of claims 1 to 5, wherein the data correlated with power consumption includes at least one of internal temperature data of a container including the cold-energy equipment, internal humidity data of the container, internal ventilation amount data of the container, outside air temperature data, or outside air humidity data.

7. A selection method executed by a computer, the selection method comprising:
calculating, based on data correlated with power consumption of portable cold-energy equipment and data related to a set temperature of the cold-energy equipment, an amount of power consumption expected during transportation of the cold-energy equipment to a predetermined destination; and
selecting, based on the amount of power consumption calculated in the calculating, a rechargeable battery to be mounted on the cold-energy equipment.

8. A program for causing a computer to execute a process of:
calculating, based on data correlated with power consumption of portable cold-energy equipment and data related to a set temperature of the cold-energy equipment, an amount of power consumption expected during transportation of the cold-energy equipment to a predetermined destination; and
selecting, based on the amount of power consumption calculated in the calculating, a rechargeable battery to be mounted on the cold-energy equipment.
